Europäisches Patentamt

European Patent Office

Office européen des brevets

(19)

(11) Publication number: **0 002 377**
**B1**

(12) # EUROPEAN PATENT SPECIFICATION

(45) Date of publication of patent specification: **25.11.81**

(51) Int. Cl.³: **B 65 G  69/00, B 63 B  17/02**

(21) Application number: **78300731.3**

(22) Date of filing: **04.12.78**

(54) **Loader cover.**

(30) Priority: **05.12.77 GB  5051377**

(43) Date of publication of application:
**13.06.79 Bulletin 79/12**

(45) Publication of the grant of the European patent:
**25.11.81 Bulletin 81/47**

(84) Designated Contracting States:
**BE DE FR GB NL**

(56) References cited:
**DE - B - 1 078 004**
**DE - B - 1 250 291**
**DE - C - 661 116**
**US - A - 2 105 589**

(73) Proprietor: **Exxon Research and Engineering Company**
**P.O.Box 390 200 Park Avenue**
**Florham Park New Jersey 07932 (US)**

(72) Inventor: **Nederhand, Albert**
**Kikkerveen 443**
**Spijkenisse (NL)**
Inventor: **Hohle, Jacobus Johannes**
**Ottersveen 44Z**
**Spijkenisse (NL)**
Inventor: **Van De Wielen, Leenardus**
**Walcherse Straat 6c**
**Rotterdam (NL)**
Inventor: **Van Der Linde, Willem Hugo**
**Waaldrift 18**
**Rockanje (NL)**
Inventor: **Bastiaanse, Bastiaan**
**Van Duyven Voordweg 4**
**Heenvliet (NL)**

(74) Representative: **Bawden, Peter Charles**
**Esso Chemical Research Centre P.O. Box 1**
**Abingdon Oxfordshire, OX13 6BB (GB)**

Courier Press, Leamington Spa, England.

Loader cover

The present invention relates to a loader and particularly to a cover which may be used to protect a bulk cargo as it is being fed to the hold of a ship. Bulk cargoes are generally fed from a loading arm direct into the hold of a ship through the open hatch cover so that both the cargo and the hold are exposed to the elements. This has two disadvantages, firstly it is necessary to stop loading during rain since water cannot generally be tolerated in either the hold or the cargo which is expensive since it means that a ship will be lying idle during the rain. Secondly and especially in loading powdered or granular cargoes such as fertilizer or grain considerably quantities of dust can be caused so polluting the atmosphere which can lead to loading being stopped. It has been proposed that ships' holds be covered during the loading of goods as, for example, in DE—B—1078004 but the flexible covers described therein are not adapted for use with a bulk cargo delivery chute and do not allow for relative movement of the loading arm and the ship.

We have therefore devised a cover which may be used to protect cargoes during loading so allowing loading to continue during wet weather and reducing the quantity of dust emitted into the surrounding environment.

The present invention therefore provides a flexible cover (10, 15) for protecting material being delivered to the hold of a ship and including means (18) for attachment to the surrounds (17) of the hold of said ship, characterized in that, said cover includes means for attachment to a delivery chute (8, 9) of a loading arm (6, 7) and comprises two sections with the first section (10) being formed as a longitudinally extendable and contractable sleeve which surrounds the chute (8, 9) and the second section (15) extending from the chute (8, 9) towards the surrounds (17) of the hold.

The cover of the present invention may be permanently attached to the loading arm whether the arm is in use or not or may be removed when the arm is not in use. The free end of the cover is attached to the surrounds of the hold of the ship when the caro is to be loaded. It is important, of course, that the cover be as light as possible consistent with the required strength so as not to put too great a strain on the loading arm. We have found that sailcloth and plastic sheeting are particularly useful materials. The method by which the cover is attached to the surrounds of the hold is not important and ropes have proved perfectly satisfactory. In wet weather the cover should, of course, be attached so as to prevent rain entering the hold but in dry weather significant dust prevention may be achieved without such stringent covering.

Loading arms generally consist of a boom along which the material to be loaded is carried to a delivery head which delivers the material vertically downwards through a chute into the hold. The boom of the loader and the chute generally move up vertically in relation to the hold as the cargo rises in the hold. The cover of the present invention is therefore attached to the loading arm in such a way that the arm may move up and down without disturbing the protective effect of the cover by mounting the cover around the delivery chute of the loading arm with the section of the cover around the chute being extendable and contractable as, for example, in the form of a concertina. We have found that such a design also allows for small variations in the height of the ship relative to the loading arms due to tides and waves.

The loading arm also moves across the opening of the hold to distribute the material throughout the hold. Thus in its preferred form the cover of the present invention allows such movement of the loading arm and chute without disturbing the protective effect of the cover. We prefer, therefore, that the cover be in two sections attached to each other but capable of moving independently of each other. The first section being attached around the chute as described above and the second being also mounted around the chute but capable of rotating relative to the axis of the chute and relative to the first section.

We have found that this may be conveniently achieved by attaching the second section to a hoop fitted with wheels which run on a rail provided at the bottom of the said first section. In this way the top of the second section may be rotatably mounted with respect to the bottom of the first section whilst the second section may extend from the bottom of said first section to cover the hold. This allows the position of the delivery chute and the first section of the cover to be altered without carrying the whole of the second section with it and whilst maintaining a protective cover over the hold. It is preferred that the rail is inside rather than outside the first section to ensure that any water flowing down the outside of the first section flows onto the outside of the second section.

We have found that the use of a cover of the type described allows loading of ships to continue in wet weather when hitherto it has been necessary to stop loading and that this applies to both bulk and bag loading. We have also found that in loading of powdered or granular materials, such as fertilizer or grain, there is sufficient reduction in the dust liberated into the surrounding atmosphere to allow loading of types that hitherto could not be achieved.

The present invention is illustrated but in no way limited by reference to the accompanying drawings in which

Figure 1 is a diagrammatic view looking down into the deck of a ship with the loader and cover omitted.

Figure 2 is a section through AA of Figure 1 with the loader and cover installed.

Figure 3 is a cross section through a circular ring system used for mounting the two sections of the cover.

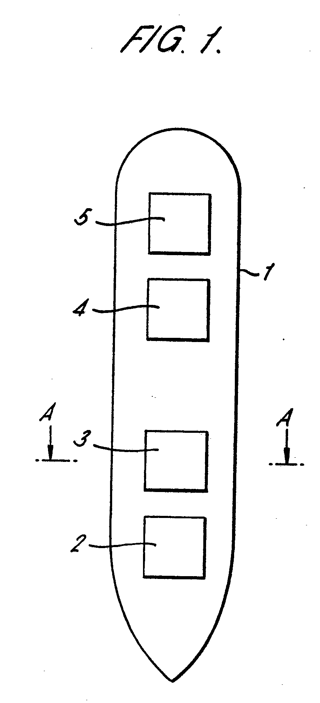

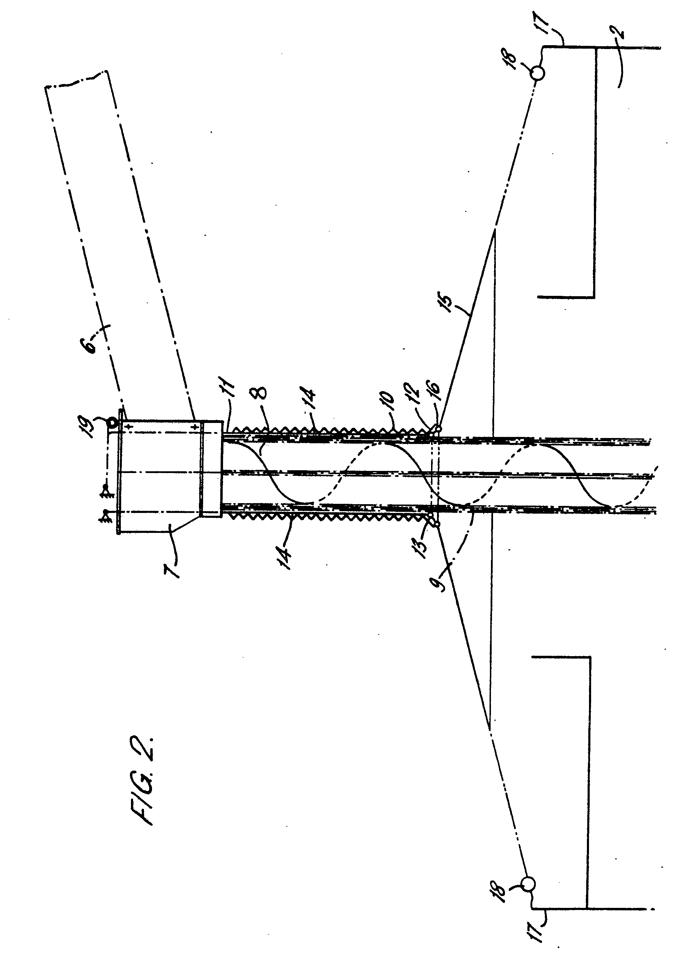

Figure 1 shows the ship 1 having four holds 2, 3, 4 and 5 and Figure 2 is the section in the line AA of Figure 1 with the loader and cover in position over hold 2. The loader consists of a loader boom 6 leading to the loading cabin 7 from which is suspended the delivery chute 8 within its frame 9.

The protective cover is in two parts, the first upper part 10 being connected at its top end 11 to the loading cabin, the lower end 12 being mounted on a ring 13 suspended between the delivery chute frame 9 and the cover 10 by wires 14. Thus, as the loading cabin and the delivery chute and frame move vertically up and down the concertinad upper part of the cover 10 can contract and expand thus allowing movement of the loader itself without significantly affecting the position of the lower part 15 of the cover which covers the hold 2.

In the embodiment shown in Figure 2 the lower part 15 of the cover is attached at its upper end to a ring 16 which is attached at its upper end to a ring 13 and thence to the loading cabin in such a way that the skirt at the bottom of upper portion 10 extends over the edge of the lower part 14 to give a water tight join. The remainder of the lower part 15 of the cover is then extended over the top of the hold 2 and attached to the surrounds of the hold 17 by any suitable means such as the springs 18.

The wires 14 which support the rings 13 and 16 are mounted on pulleys which may be driven by the motor 19 so as to raise or lower the lower part 15 of the cover should this be necessary.

In the embodiment shown in Figure 2 the upper and lower parts of the cover 10 and 15 are connected to each other so that if the loading arm moves across the top of the hold, the two parts of the cover move with it in the same relationship to each other. This means that in order for the lower part of the cover 15 to at all times cover the entire area of the opening of the hold regardless of the position of the loading arm a considerable excess of material is needed which can put an unacceptable weight on the loading arm. The amount of excess material needed may be reduced if the lower part 15 can rotate relative to the upper part 10.

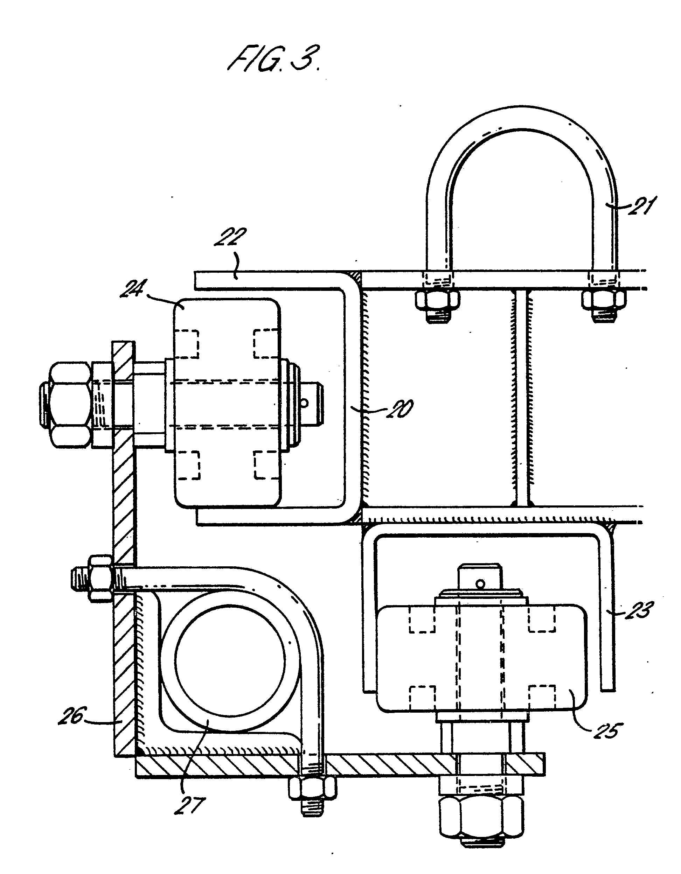

Figure 3 illustrates a cross section through a circular ring system which can replace the two rings 13 and 16 of Figure 2 to allow relative rotation of the two parts of the cover. Figure 3 shows an upper ring 20 provided with a series of loops 21 around its circumference to which the supporting wires 14 (not shown) may be attached. The ring 20 being formed with outwardly and downwardly extending "U" shaped circumferential channels 22 and 23 which fit over rollers 24 and 25 mounted on the lower ring 26 which is provided with eyes 27 to which the lower part of the cover 15 may be attached. Thus it may be seen that by substitution of this system for that in Figure 2 the upper and lower parts of the cover become free to rotate relative to each other.

## Claims

1. A flexible cover (10, 15) for protecting material being delivered to the hold of a ship and including means (18) for attachment to the surrounds (17) of the hold of said ship, characterized in that said cover includes means for attachment to a delivery chute (8, 9) of a loading arm (6, 7) and comprises two sections with the first section (10) being formed as a longitudinally extendable and contractable sleeve which surrounds the chute (8, 9) and the second section (15) extending from the chute (8, 9) towards the surrounds (17) of the hold.

2. A flexible cover according to claim 1 in which the two sections (10, 15) are attached to each other but capable of moving independently of each other.

3. A flexible cover according to claims 1 or 2 in which the second section (15) is mounted so as to be capable of rotating relative to the axis of the chute.

4. A cover according to any of the preceding claims in which the second section (15) is attached to a hoop (16) fitted with wheels (24, 25) which run on rail means (22, 23) provided at the bottom of said first section.

5. A cover according to claim 5 in which the rail means (22, 23) is inside the first section (10).

## Revendications

1. Un capot flexible (10, 15) pour protéger un produit devant être distribué dans la cale d'un navire et comportant des moyens (18) de fixation aux organes (17) d'encadrement de la cale dudit navire caractérisé en ce que ledit capot comporte des moyens de fixation à une goulotte de distribution (8, 9) d'un bras de chargement (6, 7) et comporte deux sections dont la première (10) est constituée sous la forme d'un manchon déployable et rétractable longitudinalement, qui entoure la goulotte (8, 9) et dont la seconde (15) s'étend depuis la goulotte (8, 9) vers les organes (17) d'encadrement de la cale.

2. Un capot flexible conformément à la revendication 1, dans lequel les deux sections (10, 15) sont fixées l'une à l'autre mai peuvent se déplacer indépendamment l'une de l'autre.

3. Un capot flexible conformément aux revendications 1 ou 2, dans lequel la seconde section (15) est montée de manière à pouvoir avoir une rotation par rapport à l'axe de la goulotte.

4. Un capot conformément à l'une quelconque des revendications précédentes, dans lequel la seconde section (15) est fixée à un anneau (16) équipé de galets (24, 25) qui circulent sur des rails (22, 23) prévus sur la partie inférieure de la première section.

5. Un capot conformément à la revendication 5, dans lequel les rails (22, 23) sont disposés à l'intérieur de la première section (10).

**Patentansprüche**

1. Flexible Abdeckung (10, 15) zum Schutz von in einen Schiffsladeraum zu befördernem Material, mit Mitteln (18) zur Anbringung der Abdeckung an der Umrandung (17) des Laderaums, dadurch gekennzeichnet, daß die Abdeckung Mittel zur Anbringung an einer Schütte (8, 9) eines Ladearms (6, 7) aufweist und zwei Abschnitte hat, von denen der erste Abschnitt (10) als in Längsrichtung dehnbarer und zusammenziehbarer Mantel ausgebildet ist, der die Schütte (8, 9) umgibt, während sich der zweite Abschnitt (15) von der Schütte (68, 9) zur Umrandung (17) des Laderaums erstreckt.

2. Flexible Abdeckung nach Anspruch 1, bei der die beiden Abschnitte (10, 15) aneinander angebracht, jedoch unabhängig voneinander bewegbar sind.

3. Flexible Abdeckung nach den Ansprüchen 1 oder 2, bei der der zweite Abschnitt (15) bezüglich der Achse der Schütte drehbar befestigt ist.

4. Abdeckung nach einem der vorhergehenden Ansprüche, bei der der zweite Abschnitt (15) an einem Bügel (16) angebracht ist, der Räder (24, 25) aufweist, die auf am unteren Ende des ersten Abschnittes vorgesehenen Schienen (22, 23) laufen.

5. Abdeckung nach Anspruch 5, bei der die Schienen (22, 23) im Inneren des ersten Abschnittes (10) vorgesehen sind.

# FIG. 1.

FIG. 2.

0 002 377

FIG. 3.